# EUROPEAN PATENT APPLICATION

(11) **EP 2 743 111 A1**
(43) Date of publication of application: **18.06.2014**
(21) Application number: 13180135.9
(22) Date of filing: 12.08.2013
(51) Int. Cl.: B60H 1/34, B60H 1/00

(54) **Diffusor apparatus**

(30) Priority: 11.12.2012 US 201261735745 P; 08.03.2013 US 201313790436
(71) Applicant: Linde Aktiengesellschaft, 80331 München (DE)
(72) Inventor: McCormick, Stephen A., Warrington, PA Pennsylvania 18976 (US); Newman, Michael D., Hillsborough, NJ New Jersey 08844 (US)
(74) Representative: Hofmann, Andreas

(57) **Abstract**

In order to overcome the problems that earlier apparatus have experienced, in particular in order to provide for a diffuser apparatus constructed to provide an even, uniform airflow velocity across hundred percent of a heat exchanger (30), a diffuser apparatus (10) for a space (12) of a refrigeration container (14) comprises
- a housing (18) having an internal chamber (20) extending to a nozzle portion (32) comprising a height less than a height of the internal chamber (20) and a width greater than a width of the internal chamber (20),
- a fan (22) disposed for operation in the internal chamber (20), and
- the heat exchanger (30) disposed for operation in the internal chamber (20) between the fan (22) and the nozzle portion (32).

## Description

### Technical field of the present invention

The present invention basically relates to the technical field of airflow distributions for in-transit refrigeration (ITR) systems.

### Technological background of the present invention

Known apparatus and systems for airflow distribution in ITR systems are designed and constructed for optimum airflow distribution and efficiency. However, known "off the shelf" axial flow fans which are used to drive airflow through a conventional fin to a heat exchanger coil are not directed in a manner so as to maximize consistent and uniform airflow across the coil. In addition, such known systems, such as those with axial flow fans, can also contribute to the short-circuiting of the existing airflow.

It therefore would be desirable to have a diffuser and fan which are constructed to provide an even, uniform airflow velocity across hundred percent of a heat exchanger coil.

### Disclosure of the present invention: object, solution, advantages

Starting from the disadvantages and shortcomings as described above and taking the prior art as discussed into account, an object of the present invention is to overcome the problems that earlier apparatus have experienced, in particular to provide for a diffuser apparatus constructed to provide an even, uniform airflow velocity across hundred percent of a heat exchanger.

This object is accomplished by an apparatus comprising the features of claim 1, in particular by an airflow diffuser for in-transit refrigeration (ITR). Advantageous embodiments and expedient improvements of the present invention are disclosed in the respective dependent claims.

The present invention basically provides for a diffuser apparatus for a space of a refrigeration container including
- a housing having an internal chamber extending to a nozzle portion comprising a height less than a height of the internal chamber and a width greater than a width of the internal chamber,
- a fan disposed for operation in the internal chamber, and
- a heat exchanger disposed for operation in the internal chamber between the fan and the nozzle portion.

According to an advantageous embodiment of the present invention, the housing is provided with an inlet in communication with the space and extends to accommodate an extension of the internal chamber in which the heat exchanger is disposed. The housing may further extend at another side of the heat exchanger as the nozzle portion for defusing a resulting airstream which is emitted from an outlet of the housing.

In an expedient operation of the present invention, airflow at the inlet may be drawn from the space into the internal chamber by the fan and may be forced under pressure over a coil of the heat exchanger.

Favourably, the coil may be constructed and arranged to fit within tight tolerances of the internal chamber of the housing so as to transfer heat from the space of the container over the coil through which liquid cryogen passes in the heat exchanger.

According to a preferred embodiment of the present invention, the heat exchanger may also be constructed and arranged so that it will diffuse the airflow and thereby create a uniform airflow stream which is discharged from the coil and back into the space.

When the airflow stream passes out of the coil, it may be directed by the nozzle portion which is contoured so that a height of the nozzle portion is reduced and a width of the nozzle portion is expanded resulting in an overall cross-sectional area which is constant along a substantial portion of its length.

In an advantageous embodiment of the present invention, the heat exchanger includes a cryogen inlet and a cryogen outlet, each in communication with the heat exchanger. The, in particular liquid, cryogen introduced at the cryogen inlet may be for example nitrogen (N₂) or carbon dioxide (CO₂).

In an expedient embodiment of the present invention, at least one bracket or other mechanical fastener supports the housing in the space, in particular to an interior, of the refrigeration container. The bracket may be of a type that is releasably engageable or removably mountable to the housing.

Favourably, the fan may be constructed as a low profile centrifugal fan wheel.

In a preferred embodiment of the present invention, the fan may be connected to and driven by a motor which may be mounted to an exterior of the housing.

According to an advantageous embodiment of the present invention, the heat exchanger may be disposed for operation in the internal chamber downstream of the fan and upstream of the nozzle portion. The nozzle portion may function as a diffuser nozzle.

The container may expediently be transported on a truck or other intermodal platform such as for example a ship, barge, or railroad flatbed, for example for in-transit refrigeration (ITR) use.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of non-limiting example and to the appended drawing figure taken in conjunction with the following description of the embodiments, of which:
FIG. 1 shows a side plan view in cross-section of an embodiment of an in-transit refrigeration (ITR) system according to the present invention;
FIG. 2 shows a side view in cross-section of the ITR apparatus embodiment used in FIG. 1; and
FIG. 3 shows a top plan view in cross-section of the embodiment in FIG. 2.

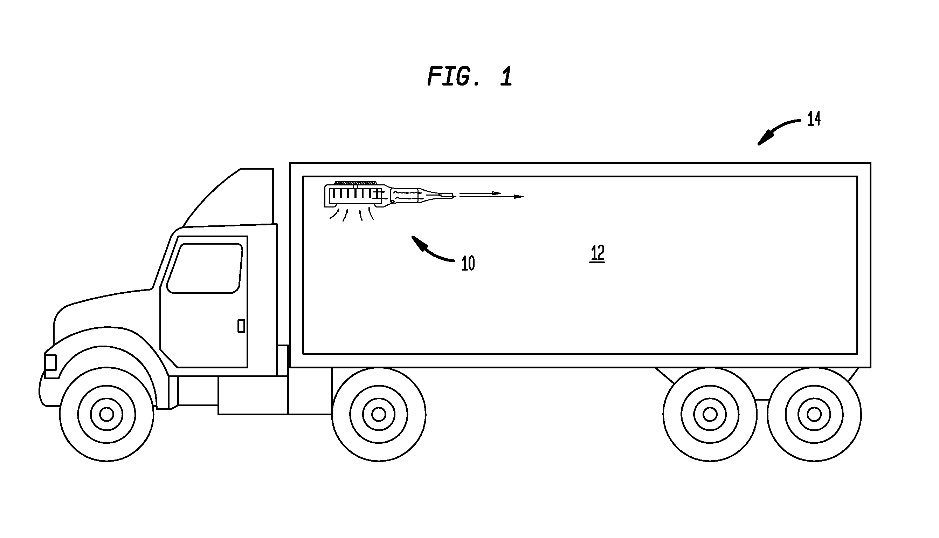

In the appended drawing figures, like equipment is labelled with the same reference numerals throughout the description of FIG. 1 to FIG. 3.

### Detailed description of the drawings; best way of embodying the present invention

Referring to FIG. 1, an embodiment of the in-transit refrigeration apparatus is shown generally at 10. The apparatus 10 is shown mounted in a space 12 of a container 14. The container 14 may be transported on a truck 16 or other intermodal platform such as for example a ship, barge, or railroad flatbed.

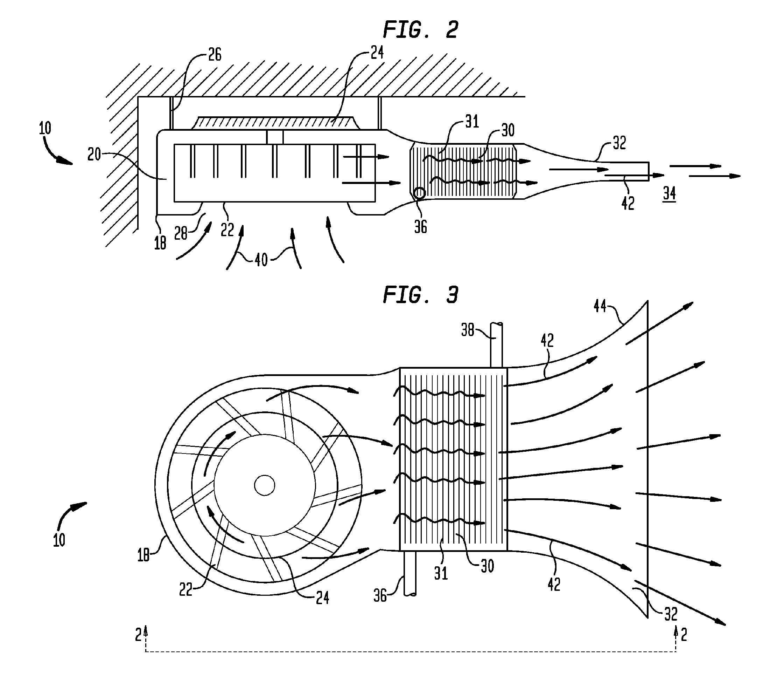

Referring also to FIG. 2 and to FIG. 3, the apparatus 10 includes a housing 18 or shroud having an internal chamber 20 or space in which a fan 22 is disposed for operation. The fan 22 is connected to and driven by a motor 24 which may be mounted to an exterior of the housing 18 as shown in FIG. 2.

At least one bracket 26 or other mechanical fasteners support the housing 18 in the space 12 of the container 14. The bracket 26 may be of a type that is releasably engageable or removably mountable to the housing 18. The fan 22 may be constructed as a low profile centrifugal fan wheel.

The housing 18 is provided with an inlet 28 in communication with the space 12.

The housing 18 extends to accommodate an extension of the chamber 20 in which is disposed a heat exchanger 30. The housing 18 further extends at another side of the heat exchanger 30 as a nozzle 32 for defusing a resulting airstream which is emitted from an outlet 34 of the housing.

The heat exchanger 30 is disposed for operation in the internal chamber 20 downstream of the fan 22 and upstream of the nozzle 32. The nozzle 32 functions as a diffuser nozzle as shown in particular in FIG. 3. The nozzle 32 has a height less than a height of the internal chamber 20, and a width greater than a width of the internal chamber 20.

The heat exchanger 30 includes a cryogen inlet 36 and a cryogen outlet 38 in communication with the heat exchanger 30.

In operation, airflow 40 at the inlet 28 is drawn from the space 12 into the chamber 20 by the fan 22 and forced under pressure over a coil 31 of the heat exchanger 30. The coil 31 is constructed and arranged to fit within tight tolerances of the chamber 20 of the housing 18 so as to transfer heat from the space 12 of the container 14 over the coil 31 through which liquid cryogen passes in the heat exchanger 30.

The heat exchanger 30 is also constructed and arranged so that it will diffuse the airflow 40 and thereby create a uniform airflow stream 42 which is discharged from the coil 31 and back into the space 12. When the airflow stream 42 passes out of the coil 31, it is directed by the diffuser nozzle 32 which is contoured so that a height of the diffuser nozzle 32 is reduced and a width of the diffuser nozzle 32 is expanded resulting in an overall cross-sectional area 44 which is constant along a substantial portion of its length.

The cross-sectional area 44 of the diffuser nozzle 32 is maintained to provide a minimal pressure drop along the flow path of the airflow stream 42 so that same is distributed evenly, i. e. at a constant velocity across a width of the diffuser nozzle 32, and then into the space 12.

The apparatus 10 provides for the use of a single fan with a power consumption of not more than 1.0 kw. Overall heat load of the apparatus 10 is reduced and the refrigerated airflow stream 42 will be more evenly distributed throughout the space 12 of the container 14.

The present embodiments of the invention include an airflow diffuser which both creates an even velocity profile across the coil 31 of the heat exchanger 30, thereby maximizing the heat exchanger efficiency; and produces the uniform gas stream 42 having constant velocity and volumetric flow across the cross-section area 44 of the apparatus 10 as shown in FIG. 3.

The uniform airflow stream 42 being discharged having a "low profile" with a constant velocity and volumetric flow is desirable for ITR systems, as such a flow provides for even distribution of container 14 refrigeration, thereby resulting in more even cooling throughout the container space 12.

The present embodiments can be retrofitted to existing shipping containers. The cryogen introduced at the cryogen inlet may be for example nitrogen (N₂) or carbon dioxide (CO₂).

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: diffuser apparatus, in particular in-transit refrigeration diffuser apparatus
- 12: space
- 14: container, in particular refrigeration container
- 16: truck
- 18: housing or shroud
- 20: internal chamber or space
- 22: fan, in particular low profile centrifugal fan wheel
- 24: motor
- 26: bracket or other mechanical fastener
- 28: inlet of housing or shroud 18
- 30: heat exchanger
- 31: coil of heat exchanger 30
- 32: nozzle or nozzle portion, in particular diffuser nozzle
- 34: outlet of housing or shroud 18
- 36: cryogen inlet of heat exchanger 30
- 38: cryogen outlet of heat exchanger 30
- 40: airflow
- 42: airflow stream or gas stream, in particular uniform airflow stream or uniform gas stream
- 44: cross-sectional area

## Claims

1. A diffuser apparatus (10) for a space (12) of a refrigeration container (14), comprising:
- a housing (18) having an internal chamber (20) extending to a nozzle portion (32) comprising a height less than a height of the internal chamber (20) and a width greater than a width of the internal chamber (20),
- a fan (22) disposed for operation in the internal chamber (20), and
- a heat exchanger (30) disposed for operation in the internal chamber (20) between the fan (22) and the nozzle portion (32).

2. The diffuser apparatus according to claim 1, wherein the housing (18) further comprises
- an inlet (28) at the internal chamber (20) in fluid communication with the space (12) of the refrigeration container (14), and
- an outlet (34) at the nozzle portion (32) in fluid communication with the space (12) of the refrigeration container (14).

3. The diffuser apparatus according to claim 2, wherein airflow (40) at the inlet (28) is drawn from the space (12) into the internal chamber (20) by the fan (22) and forced under pressure over at least one coil (31) of the heat exchanger (30).

4. The diffuser apparatus according to claim 3, wherein the coil (31) is constructed and arranged to fit within tight tolerances of the internal chamber (20) so as to transfer heat from the space (12) over the coil (31) through which liquid cryogen passes in the heat exchanger (30).

5. The diffuser apparatus according to claim 3 or 4, wherein the heat exchanger (30) diffuses the airflow (40) and thereby creates a uniform airflow stream (42) which is discharged from the coil (31) and back into the space (12).

6. The diffuser apparatus according to claim 5, wherein the airflow stream (42), when passing out of the coil (31), is directed by the nozzle portion (32) which is contoured so that a height of the nozzle portion (32) is reduced and a width of the nozzle portion (32) is expanded resulting in an overall cross-sectional area (44) of the nozzle portion (32) being constant along a substantial portion of its length.

7. The diffuser apparatus according to at least one of claims 1 to 6, further comprising
- a cryogen inlet (36) in communication with the heat exchanger (30), and
- a cryogen outlet (38) in communication with the heat exchanger (30).

8. The diffuser apparatus according to claim 7, wherein the cryogen inlet (36) receives a cryogenic substance, in particular the liquid cryogen, selected from the group consisting of nitrogen (N₂) and carbon dioxide (CO₂).

9. The diffuser apparatus according to at least one of claims 1 to 8, further comprising at least one bracket (26) disposed to mechanically fasten the housing (18) to an interior of the refrigeration container (14).

10. The diffuser apparatus according to claim 9, wherein the at least one bracket (26) is removably mountable to the housing (18).

11. The diffuser apparatus according to at least one of claims 1 to 10, wherein the fan (22) is constructed as a low profile centrifugal fan wheel.

12. The diffuser apparatus according to at least one of claims 1 to 11, further comprising a motor (24) for the fan (22) mounted to the housing (18) external to the internal chamber (20).

13. The diffuser apparatus according to at least one of claims 1 to 12, wherein the heat exchanger (30) is disposed downstream of the fan (22) and upstream of the nozzle portion (32).

14. The diffuser apparatus according to at least one of claims 1 to 13, wherein the nozzle portion (32) is constructed as a diffuser nozzle.

15. The diffuser apparatus according to at least one of claims 1 to 14, wherein the container (14) is transported on a truck (16) or on another intermodal platform, in particular on a ship, on a barge, or on a railroad flatbed, for example for in-transit refrigeration (ITR) use.
